(19) Europäisches Patentamt

European Patent Office

Office européen des brevets

(11) **EP 0 960 169 B1**

(12) **EUROPÄISCHE PATENTSCHRIFT**

(45) Veröffentlichungstag und Bekanntmachung des Hinweises auf die Patenterteilung:
**08.05.2002   Patentblatt 2002/19**

(21) Anmeldenummer: **98909436.2**

(22) Anmeldetag: **11.02.1998**

(51) Int Cl.[7]: **C09D 5/03**

(86) Internationale Anmeldenummer:
**PCT/EP98/00746**

(87) Internationale Veröffentlichungsnummer:
**WO 98/36030 (20.08.1998 Gazette 1998/33)**

(54) **FARBIGE PULVERFÖRMIGE BESCHICHTUNGSMASSE**

COLOURED POWDERY COATING MASS

MATIERE DE REVETEMENT PULVERULENTE COLOREE

(84) Benannte Vertragsstaaten:
**AT BE CH DE DK ES FI FR GB IE IT LI NL SE**

(30) Priorität: **17.02.1997   DE 19705960**

(43) Veröffentlichungstag der Anmeldung:
**01.12.1999   Patentblatt 1999/48**

(73) Patentinhaber: **DuPont Performance Coatings GmbH & Co. KG**
**42285 Wuppertal (DE)**

(72) Erfinder:
 • **BLATTER, Karsten**
   **D-65817 Eppstein (DE)**
 • **SIMON, Peter**
   **D-65817 Eppstein (DE)**

(74) Vertreter: **Biering, Christine**
**DuPont Performance Coatings GmbH und Co. KG**
**Christbusch 25**
**42285 Wuppertal (DE)**

(56) Entgegenhaltungen:
**EP-A- 0 459 048**

 • **PATENT ABSTRACTS OF JAPAN vol. 096, no. 010, 31.Oktober 1996 & JP 08 143788 A (NIPPON CARBIDE IND CO INC), 4.Juni 1996,**
 • **PATENT ABSTRACTS OF JAPAN vol. 095, no. 010, 30.November 1995 & JP 07 188586 A (KANSAI PAINT CO LTD), 25.Juli 1995,**

## Beschreibung

Die vorliegende Erfindung betrifft farbige, pulverförmige Beschichtungsmassen, enthaltend kugelförmige Partikel mit einer mittleren Partikelgröße < 40 µm und einer monomodalen Partikelgrößenverteilung mit einem Span (d90-d10/d50) von ≦2,5. Die erfindungsgemäßen Beschichtungsmassen lassen sich bei Temperaturen < 200°C zu einem kontinuierlichen Überzug aufgeschmolzen und eignen sich insbesondere für die Verwendung als Pulverlacke.

Pulverlacke bestehen in der Regel aus einem gegebenenfalls vernetzbaren, filmbildenden Polymer, Additiven wie z.B. Fließverbesserer oder Entgasungshilfsmitteln, sowie im Fall von gefärbten Pulverlacken aus einem oder mehreren Pigmenten oder Farbstoffen und Füllstoffen.

Pulverlacke werden traditionell hergestellt, indem man die oben genannten Komponenten in einem Extruder bei einer Temperatur oberhalb der Erweichungstemperatur des filmbildenden Polymers, aber unterhalb der Vernetzungstemperatur intensiv vermischt und das resultierende Extrudat anschließend durch einen Mahlprozeß auf eine Korngröße von ca. 40 bis 70 µm bringt.

Ein wesentlicher Nachteil von Pulverlacken im Vergleich mit Flüssiglacksystemen ist die Tatsache, daß die Farbe des Pulverlackes während der Herstellung des Extrudates vor dem Mahlprozeß durch entsprechende Dosierung farbgebender Komponenten eingestellt werden muß. Eine Änderung des Farbtons im fertigen Pulver durch Abmischen verschiedenfarbiger Pulver ist bisher nicht möglich, da aufgrund der Partikelgröße der Pulver aus den bisher angewendeten Mahlverfahren das menschliche Auge im fertigen Lack die einzelnen zur Mischung eingesetzten Farben noch unterscheiden kann und damit die Beschichtung einen uneinheitlichen Eindruck macht (D. A. Bate, "The Science of Powder Coatings" page 17, SITA, UK 1990 ISBN 0 9477798005).

Für Flüssiglacke ist es dagegen üblich, Lacke in den verschiedenen Grundfarben herzustellen und den aktuell benötigten Farbton durch Abmischen dieser Grundfarben einzustellen. Dieses Verfahren hat den Vorteil, daß nur die Grundfarben vorrätig gehalten werden müssen. Der logistische Aufwand ist also wesentlich geringer als für konventionelle Pulverlacksysteme, wo jeder Farbton speziell hergestellt werden muß und auch eine Korrektur von Farbabweichungen, z.B. durch Qualitätsschwankungen der eingesetzten Rohstoffe, nicht möglich ist.

Es hat daher bereits in der Vergangenheit Versuche gegeben, diese Nachteile von Pulverlacken zu überwinden. Beispielsweise beschreibt EP-B- 0 459 048 ein Verfahren zur Herstellung gefärbter Pulverlacke durch Abmischen von feinsten Partikeln mit einer Korngröße < 20 µm, die durch extensive Mahlprozesse erhalten werden. Bei den hier beschriebenen Beschichtungsmassen müßen im wesentlichen alle Teilchen eine Partikelgröße von weniger als 20 µm, insbesondere < 15 µm aufweisen. Der Nachteil bei den offenbarten Beschichtungsmassen liegt insbesondere darin, daß sich Partikel mit einer Größe von weniger als 15 µ nicht mehr nach dem elektrostatischen Sprühverfahren bearbeiten lassen. Dieser Umstand ist im wesentlichen auf die unregelmäßige Struktur der in Mahlverfahren erhaltenen Partikel zurückzuführen. Die oben erwähnten gefärbten Partikel müssen daher vor der Applikation als Pulverlack in einem zusätzlichen Prozeßschritt zu größeren Partikeln mit einem Durchmesser von ca. 30 µm oder größer agglomeriert werden. Dieser zusätzliche Verfahrensschritt bedeutet einen erheblichen Aufwand. Insbesondere ist eine Einstellung der Farbe eines Pulverlackes durch einfaches Mischen von zwei oder mehreren gefärbten Pulvern ohne Nachbehandlung auch nach diesem Verfahren nicht möglich.

Zur Charakterisierung des durchschnittlichen Partikeldurchmessers eines Pulvers sowie der Breite der Partikelgrößenverteilung werden neben der Größe d50, für die gerade 50 % der Partikel größer bzw. kleiner als der Wert d50 sind, noch zwei weitere Größen herangezogen. Mit d10 wird die Partikelgröße bezeichet, für die 10% der Partikel kleiner als dieser Grenzwert sind. Entsprechend bezeichnet man mit d90 die Partikelgröße, für die 90% der Partikel feiner als der Wert d90 sind. Zur Charakterisierung der Breite einer Partikelgrößenverteilung wird in der Regel ein Quotient gebildet, der als Span bezeichnet wird und nach folgender Formel berechnet wird: Span = d90-d10/d50. Es gilt: je kleiner der Span, desto enger die Partikelgrößenverteilung. Ein Pulver aus identischen Kugeln hätte einen Span von 0. Für Mahlpulver nach dem Stand der Technik mit einer mittleren Partikelgröße d50 von 50 µ wird typischerweise ein Span von 3 - 4 erhalten.

Es wurde nun gefunden, daß Beschichtungsmassen enthaltend gefärbte, nicht poröse, kugelförmige Pulverlackpartikel mit einer mittleren Größe von < 40 µm und einer engen Partikelgrößenverteilung sich auf einfache Weise mit elektrostatischen Sprühverfahren zu homogen gefärbten Überzügen verarbeiten lassen.

Die vorliegende Erfindung betrifft somit pulverförmige Beschichtungsmassen, enthaltend kugelförmige Partikel mit einer mittleren Partikelgröße < 40 µm, von zwei oder mehr verschiedenen Farbabstimmungen, wobei mindestens die Partikel einer Farbabstimmung gefärbt sind und die Partikel der anderen Farbabstimmung gegebenenfalls farblos sind und die für die Mischung eingesetzten Partikel jeweils eine monomodale Partikelgrößenverteilung mit einem Span (d90-d10/d50) von ≦2,5 besitzen und die pulverförmige Beschichtungsmasse bei Temperaturen < 200°C zu einem kontinuierlichen Überzug aufgeschmolzen werden kann, wobei in dem gehärteten Überzug die Unterschiede in der Farbe, die von den unterschiedlichen farbigen Teilchen herrühren, durch das menschliche Auge nicht unterschieden werden konnen.

Ferner betrifft die vorliegende Anmeldung ein Verfahren zur Herstellung von farbigen pulverförmigen Beschichtungsmassen einer gewünschten Farbe, durch Bereitstellen von mindestens einer Beschichtungsmasse in einer Grundfarbe sowie mindestens einer weiteren unterschiedlich gefärbten, gegebenenfalls farblosen, Beschichtungsmasse und Vermischen der Beschichtungsmassen. Dabei enthält jede der eingesetzten Beschichtungsmassen kugelförmige Partikel mit einer mittleren Partikelgröße < 40 μm. Beim Auftragen der erhaltenen gemischten Beschichtungsmasse auf ein Substrat bei Temperaturen < 200 °C bildet sich ein kontinuierlicher Überzug in der gewünschten Farbe, in dem die Unterschiede in der Farbe, die von den verschiedenen Teilchen herrühren, durch das menschliche Auge nicht unterschieden werden können.

Die Einstellung der gewünschten Farbe der erfindungsgemäßen farbigen, pulverförmigen Beschichtungsmasse erfolgt durch Abmischen von mindestens zwei unterschiedlich gefärbten pulverförmigen Beschichtungsmassen, wobei eine Beschichtungsmasse gegebenenfalls farblos sein kann. Häufig werden allerdings drei oder mehr Beschichtungsmassen in verschiedenen Farbabstimmungen benötigt, um einen spezifischen Farbton einzustellen. Durch die Verwendung einer farblosen oder nur mit Füllstoff versehenen Beschichtungsmasse als Mischkomponente ist es auf diese Weise möglich die Farbstärke einer Mischung einzustellen, d.h. auch hellere Farbtöne zu erzeugen.

Pulverförmige Beschichtungsmassen, die als Ausgangskomponenten für das erfindungsgemäße Mischverfahren geeignet sind, können z.B. durch ein Dispersionsverfahren hergestellt werden. Durch geeignete Wahl der Reaktionsbedingungen ist es möglich, Pulver mit einer engen Partikelgrößenverteilung zu erhalten.

Ein Verfahren zur Herstellung, der für die erfindungsgemäßen Beschichtungsmassen benötigten kugelförmigen transparenten oder gefärbten Pulver mit einer mittleren Partikelgröße < 40 μm und einem Span ≤ 2,5, wird in den prioritätsgleichen Deutschen Patentanmeldungen 19705961.9 und 19705962.7 beschrieben, auf die hiermit ausdrücklich Bezug genommen wird.

So können z.B. die erfindungsgemäß eingesetzten homogen gefärbten, kugelförmige Partikel enthaltenden, gegebenenfalls vernetzbaren Beschichtungsmassen hergestellt werden, indem man

a. die Ausgangsstoffe für ein Polyesterbindemittel in einem inerten hochsiedenden Wärmeträger bei einer Temperatur, die mindestens so hoch ist wie die Erweichungstemperatur der Ausgangsstoffe in Gegenwart mindestens eines polymeren, vorzugsweise organischer, Dispersionsstabilisators dispergiert und

b. anschließend die Reaktionsmischung auf eine Temperatur im Bereich von 120 bis 280°C, unter gleichzeitiger Abführung der Kondensationsnebenprodukte, erhitzt, bis der Polyester das gewünschte Molekulargewicht besitzt;

c. darauffolgend im Temperaturbereich im Bereich von 140 bis 220°C Farbstoffe, Pigmente und/oder Füllstoffe sowie gegebenenfalls weitere Additive zugibt;

d. die Reaktionsmischung im Falle eines vernetzbaren funktionellen Polyesters danach auf eine Temperatur im Bereich von 60 bis 140°C abkühlt und mindestens ein mehrfunktionelles Vernetzungsmittel oder Epoxidharz zugibt und

e. anschließend die Temperatur in einen Bereich, der unterhalb der Erweichungstemperatur des Polyesters liegt absenkt und die erhaltenen homogen gefärbten, kugelförmigen Polyesterpartikel abtrennt.

Als Ausgangsstoffe für die vorstehend genannten Beschichtungsmassen werden vorzugsweise Oligoester mit einer Viskosität von weniger als 1000 mPas (gemessen bei 200° C), insbesondere ≤ 500 mPas, eingesetzt.

Die Mischung der verschieden farbigen pulverförmigen Beschichtungsmassen erfolgt durch einfachste mechanische Mischapparate wie z.B. Taumler oder Schüttelapparate oder durch gemeinsame Verwirbelung der Pulver in einem Wirbelbett wie es z. B. für elektrostatische Sprühverfahren eingesetzt wird.

Für die Qualität der erfindungsgemäßen Beschichtungsmassen sind insbesondere die Kugelform der zu mischenden Partikel und deren Partikelgrößenverteilung entscheidend.

Die erfindungsgemäße Beschichtungsmasse enthält kugelförmige Partikel mit einer mittleren Partikelgröße < 40 μm, bevorzugt < 30 μm. Die mittlere Partikelgröße (d50) der kugelförmigen Partikel sollte im Bereich von 40 bis > 10, insbesondere von 35 bis 20 μm liegen. Ein Überschreiten der oberen mittleren Partikelgröße von 40 μm führt dazu, daß es nicht mehr möglich ist, dünne Beschichtungen mit Dicken < 50 μm herzustellen. Außerdem werden für Pulver mit einer mittleren Partikelgröße von deutlich mehr als 40 μm die Unterschiede in der Farbe der Beschichtung für das menschliche Auge erkennbar.

Auch sehr feine Pulver aus kugelförmigen Partikeln mit einer mittleren Partikelgröße von weniger als 20 μm lassen sich problemlos nach den für Pulverlacken üblichen elektrostatischen Sprühverfahren verarbeiten und führen zu besonders dünnen Beschichtungen mit sehr gleichmäßiger Oberfläche.

Die in der erfindungsgemäßen farbigen, pulverförmigen Beschichtungsmasse enthaltenen kugelförmigen Partikel besitzen eine monomodale Partikelgrößenverteilung mit einem Span (d90-d10/d50) von ≤ 2,5, insbesondere ≤ 2,0, vorzugsweise ≤ 1.5.
Durch die besonders enge Partikelgrößenverteilung der erfindungsgemäßen Beschichtungsmasse wird verhindert, daß besonders grobe Anteile zu einer Ungleichmäßigkeit der Beschichtung führen. So erweckt bereits die einfache physikalische Mischung der in der Beschichtungsmasse enthaltenen Pulver für das menschliche Auge den Eindruck, als würde es sich um ein homogen eingefärbtes Pulver handeln.

Die in der Beschichtungsmasse enthaltenen gefärbten Partikel enthalten hierbei vorzugsweise Einheiten der Formeln (1) und (2),

$$-CO-X-CO$$

$$(1)$$

$$-O-D-O-$$

$$(2)$$

wobei

X für einen substituierten oder unsubstituierten $C_6$ bis $C_{14}$-aromatischen Rest oder einen Akylen- Polymethylen- Cycloalkan- Dimethylen-cycloalkangruppe oder eine geradkettige oder verzweigte, ggf. ungesättigte Alkandiyl-Gruppe steht und

D eine Alkylen-, Polymethylen-, Cycloalkan-, Dimethylen-cycloalkangruppe oder eine geradkettige oder verzweigte, gegebenenfalls ungesättigte Alkandiyl-Gruppe bedeutet.

Als Bindemittel werden für die beschriebenen Beschichtungsmassen vorzugsweise Polyester, die gegebenenfalls vernetzbar sind, eingesetzt. Allerdings sind auch andere bekannte Bindemittel, z.B. auf Basis Polyurethan, Epoxid oder Polyacrylat für das Mischverfahren einsetzbar.

Die durch die Mischung der verschieden gefärbten Pulver erhaltenen Beschichtungsmassen bedürfen keiner Nachbehandlung und können sofort nach den üblichen Methoden zu Überzügen verarbeitet werden. Die erfindungsgemäßen Pulver eignen sich auf Grund ihrer einheitlichen Partikelgrößenverteilung besonders gut zur Verarbeitung nach dem elektrostatischen Sprühverfahren.

So können die erfindungsgemäßen farbigen Beschichtungsmassen nach Applikation auf eine geeignete Oberfläche bei Temperaturen unterhalb 200 °C, insbesondere bei Temperaturen im Bereich von 120 bis 200 °C, vorzugsweise 160 bis 200 °C, zu einem kontinuierlichen Überzug aufgeschmolzen werden, der in dem Fall, wenn eine ein vernetzbares Bindersystem enthaltende Beschichtungsmasse zur Abmischung eingesetzt wurde, bei diesen Temperaturen auch ausgehärtet werden kann.

Die farbigen Beschichtungsmassen der vorliegenden Erfindung lassen sich aufgrund ihrer engen Partikelgrößenverteilung ausgezeichnet nach den üblichen Verfahren der Pulverlackbeschichtungstechnologie verarbeiten und ergeben homogen gefärbte Beschichtungen mit einer sehr guten Oberfläche. Im Vergleich zu den bekannten Pulvern kommt es bei den erfindungsgemäßen pulverförmigen Beschichtungsmassen bei der Verarbeitung zu Pulverlacküberzügen zu keiner Separation der Pigmentpartikel von den Polymerpartikel und zu keiner Separation der eingesetzten verschiedenfarbigen Beschichtungsmassen untereinander. Ferner müßen die in der Beschichtungsmasse enthaltenen kugelförmigen Partikel vor der Versprühung als Pulverlack nicht agglomeriert werden. Die auf diese Weise hergestellten Überzüge zeichnen sich daher durch eine sehr homogene, einheitliche Farbgebung und eine ausgezeichnete Deckkraft aus.

In den gebildeten kontinuierlichen Überzügen können die Unterschiede in der Farbe, die von den verschiedenen Teilchen herrühren, durch das menschliche Auge nicht unterschieden werden.

Im Vergleich zu anderen im Stand der Technik bekannten Beschichtungsmassen, die üblicherweise eine Beschichtungsdicke von 50 bis 70 µm ergeben, gelingt es, mit Hilfe der hier beschriebenen Pulver homogen gefärbte Schichten mit Dicken < 50 µm, vorzugsweise Beschichtungen mit Dicken im Bereich von 5 bis 40 µm, insbesondere 10 bis 35 µm, herzustellen.

Die folgenden Beispiele illustrieren die Erfindung:

Beispiele:

Beispiel 1: Herstellung vernetzbarer Beschichtungen

Nach dem in der Deutschen Patentanmeldung 19705962.7 in Beispiel 3 beschriebenen Verfahren wurden folgende eingefärbte Pulver hergestellt:

Pulver 1:  Entspricht Nummer 2 in Beispiel 2, eingefärbt mit 5 % des Pigmentes PV Echtrot, mittlere Partikelgröße 28 µm

Pulver 2:    Entspricht Nummer 4 in Beispiel 2, eingefärbt mit 5 % des Pigmentes PV Echtblau, mittlere Partikelgröße 29 µm.

Pulver 3:    Analog der allgemeinen Vorschrift in Beispiel 2 von 19705962.7 wurde ein ungefärbtes Pulver durch Zusatz einer Dispersion von 150 g Bariumsulfat, und 3,5 g ®Antaron (ISP Global) bei 200°C hergestellt. Das erhaltene weiße Pulver hat eine mittlere Partikelgröße von 25 µm.

Pulver 4:    Transparenter Pulverlack hergestellt nach Beispiel 2b der Deutschen Patentanmeldung 19705961.9, mittlere Partikelgröße 19 µm.

Durchführung der Mischexperimente:

Die Pulver wurden in den in Tabelle 1 angegebenen Mengenverhältnissen in einen Kunststoffbehälter eingewogen und durch manuelles Schütteln intensiv vermischt. Die erhaltenen Pulvermischungen zeigten bereits die gewünschte Mischfarbe. Die Pulvermischungen wurden anschließend mit einer Tribologischen Pulversprühpistole auf Aluminiumbleche von ca. 0.9 mm Stärke aufgesprüht. Nach Aushärtung der Beschichtung bei 180°C für 20 min. wurden homogene Überzüge mit ausgezeichneter Oberfläche erhalten. Die Farbe der Beschichtungen ist über die gesamte Fläche gleichmäßig. Die erhaltenen Schichtdicken sind in Tabelle 1 aufgeführt.

Tabelle 1

| Nr. | Komponente 1 | Komponente 2 | Komponente 3 | Schichtdicke (µm) | Farbe |
|---|---|---|---|---|---|
| 1 | Pulver 1 90 g | Pulver 3 10g | - | 30 | kräftiges Blau |
| 2 | Pulver 1 50 g | Pulver 3 50 g | - | 28 | helles Blau |
| 3 | Pulver 1 10 g | Pulver 3 90 g | - | 25 | sehr helles Blau |
| 4 | Pulver 1 20 g | Pulver 2 80 g | - | 34 | rot-violett |
| 5 | Pulver 1 50 g | Pulver 2 50 g | - | 26 | leuchtend violett |
| 6 | Pulver 1 80 g | Pulver 2 20 g | - | 32 | dunkel violett |
| 7 | Pulver 1 30 g | Pulver 2 30 g | Pulver 3 40 g | 25 | hell violett |
| 8 | Pulver 1 50 g | Pulver 4 50 g | - | 23 | helles Blau mit geringerer Deckkraft als Nr. 1 |

Beispiel 2: Herstellung thermoplastischer Beschichtungen

Wie im Beispiel 3 der Deutschen Patentanmeldung 19705962.7 beschrieben werden folgende Pulver hergestellt:

Pulver 5:    Enspricht Nr. 4, eingefärbt mit dem Pigment PV Echtgelb, mittlerer Partikeldurchmesser: 32 µm.

Pulver 6:    Entspricht Nr. 5, eingefärbt mit dem Pigment PV Echtblau, mittlerer Partikeldurchmesser: 34 µm.

Pulver 7:    Enspricht Nr. 1, eingefärbt , mit dem Pigment ®Hostaperm Hoechst) violett RI, mittlerer Partikeldurchmesser: 19 µm

Pulver 8:    Wie im Beispiel 4d der Deutschen Patentanmeldung 19705961.9 beschrieben wird ein farbloses Pulver mit einem mittleren Partikeldurchmesser von 16,6 µm hergestellt

Durchführung der Mischexperimente:

Die Pulver wurden in den in Tabelle 2 angegebenen Mengenverhältnissen in einen Kunststoffbehälter eingewogen und durch manuelles Schütteln intensiv vermischt. Die erhaltenen Pulvermischungen zeigten bereits die gewünschte Mischfarbe. Die Pulvermischungen wurden anschließend mit einer Tribologischen Pulversprühpistole auf Aluminiumbleche von ca. 0.9 mm Stärke aufgesprüht. Nach Aufschmelzen der Beschichtung bei 190°C für 10 min. wurden homogene Überzüge mit ausgezeichneter Oberfläche erhalten. Die Farbe der Beschichtungen ist über die gesamte Fläche gleichmäßig. Die erhaltenen Schichtdicken sind in Tabelle 2 aufgeführt.

Tabelle 2:

| Nr. | Kompo-nente 1 | Kompo-nente 2 | Kompo-nente 3 | Schichtdicke (µm) | Farbe |
|---|---|---|---|---|---|
| 1 | Pulver 5 10 g | Pulver 6 90 g | - | 28 | dunkelgrün |
| 2 | Pulver 5 50 g | Pulver 6 50 g | - | 30 | mittelgrün |
| 3 | Pulver 5 20 g | Pulver 6 80 g | - | 27 | hellgrün |
| 4 | Pulver 5 25 g | Pulver 6 25 g | Pulver 8 50 g | 25 | mittelgrün mit geringerer Deckkraft als Nr. 2 |
| 5 | Pulver 8 90 g | Pulver 7 10 g | - | 20 | transparente Beschichtung mit leicht violetter Einfärbung |

**Patentansprüche**

1. Farbige, pulverförmige Beschichtungsmasse, enthaltend kugelförmige Partikel mit einer mittleren Partikelgröße < 40 µm, von zwei oder mehr verschiedenen Farbabstimmungen, wobei mindestens die Partikel einer Farbabstimmung gefärbt sind und die Partikel der anderen Farbabstimmung gegebenenfalls farblos sind, **dadurch gekennzeichnet, daß** die für die Mischung eingesetzten Partikel jeweils eine monomodale Partikelgrößenverteilung mit einem Span (d90-d10/d50) von ≤ 2,5 besitzen und die pulverförmige Beschichtungsmasse bei Temperaturen < 200°C zu einem kontinuierlichen Überzug aufgeschmolzen werden kann, wobei in dem gehärteten Überzug die Unterschiede in der Farbe, die von den unterschiedlichen farbigen Teilchen herrührt, durch das menschliche Auge nicht unterschieden werden kann.

2. Beschichtungsmasse nach Anspruch 1, **dadurch gekennzeichnet, daß** die mittlere Partikelgröße (d50) der kugelförmigen Partikel im Bereich von 40 µm bis > 10 µm liegt.

3. Beschichtungsmasse nach Anspruch 1 und/oder 2, **dadurch gekennzeichnet, daß** sich damit Beschichtungen mit einer Dicke < 50 µm herstellen lassen.

4. Beschichtungsmasse nach mindestens einem der Ansprüche 1 bis 3, **dadurch gekennzeichnet, daß** die Beschichtungsmasse als Bindemittel Polyester, die gegebenenfalls vernetzbar sind, enthält.

5. Beschichtungsmasse nach mindestens einem der Ansprüche 1 bis 4, **dadurch gekennzeichnet, daß** die gefärbten Partikel Einheiten der Formeln (1) und (2) enthalten

$$-CO-X-CO$$

$$(1)$$

$$-O-D-O-$$

# EP 0 960 169 B1

(2)

wobei

X für einen substituierten oder unsubstituierten C$_6$ bis C$_{14}$-aromatischen Rest oder einen Alkylen- Polymethylen- Cycloalkan- Dimethylen-cycloalkangruppe oder eine geradkettige oder verzweigte, gegebenenfalls ungesättigte Alkandiyl-Gruppe steht und

D eine Alkylen-, Polymethylen-, Cycloalkan-, Dimethylen-cycloalkangruppe oder eine geradkettige oder verzweigte, ggf. ungesättigte Alkandiyl-Gruppe bedeutet.

6. Verwendung der Beschichtungsmasse nach mindestens einem der Ansprüche 1 bis 5 für Pulverlackbeschichtungen.

7. Verfahren zur Herstellung von farbigen pulverförmigen Beschichtungsmassen einer gewünschten Farbe, durch Bereitstellen von mindestens einer Beschichtungsmasse in einer Grundfarbe sowie mindestens einer weiteren unterschiedlich gefärbten, gegebenenfalls farblosen, Beschichtungsmasse und Vermischen der Beschichtungsmassen, **dadurch gekennzeichnet, daß** jede der eingesetzten Beschichtungsmassen kugelförmige Partikel mit einer mittleren Partikelgröße < 40 μm enthält und, daß sich, nach Auftragen der Beschichtungsmasse auf ein Substrat, bei Temperaturen < 200 °C ein kontinuierlicher Überzug in der gewünschten Farbe bildet, in dem die Unterschiede in der Farbe, die von den verschiedenen Teilchen herrühren, durch das menschliche Auge nicht unterschieden werden können.

## Claims

1. Coloured, pulverulent coating composition containing spherical particles of an average particle size of < 40 μm in two or more different colour tones, wherein at least the particles of one colour tone are coloured and the particles of the other colour tone are optionally colourless, **characterised in that** the particles used for the mixture in each case exhibit a monomodal particle size distribution with a span (d90-d10/d50) of ≤ 2.5 and the pulverulent coating composition may be fused at temperatures of < 200°C to yield a continuous coating, wherein in the cured state the differences in colour arising from the different coloured particles cannot be distinguished by the human eye.

2. Coating composition according to claim 1, **characterised in that** the average particle size (d50) of the spherical particles is in the range from 40 μm to > 10 μm.

3. Coating composition according to claim 1 and/or 2, **characterised in that** coatings of a thickness of < 50 μm may be produced therewith.

4. Coating composition according to at least one of claims 1 to 3, **characterised in that** the coating composition contains polyesters, which are optionally cross-linkable, as binder.

5. Coating composition according to at least one of claims 1 to 4, **characterised in that** the coloured particles contain units of the formula (1) and (2)

-CO-X-CO

(1)

-O-D-O-

(2)

wherein

X denotes a substituted or unsubstituted C$_6$ to C$_{14}$ aromatic residue or an alkylene, polymethylene, cycloalkane, dimethylenecycloalkane group or a linear or branched, optionally unsaturated alkanediyl group and

D means an alkylene, polymethylene, cycloalkane, dimethylenecycloalkane group or a linear or branched,

7

optionally unsaturated alkanediyl group.

6. Use of the coating composition according to at least one of claims 1 to 5 for powder coatings.

7. Process for the production of coloured pulverulent coating compositions of a desired colour by providing at least one coating composition in a base colour together with at least one further differently coloured, optionally colourless, coating composition and mixing the coating compositions, **characterised in that** each of the coating compositions used contains spherical particles of an average particle size of < 40 μm and that, once the coating composition has been applied onto a substrate, a continuous coating of the desired colour is formed at temperatures of < 200°C, in which coating the differences in colour arising from the different particles cannot be distinguished by the human eye.

**Revendications**

1. Masse de revêtement de couleur sous forme de poudre, contenant des particules en forme de billes ayant une dimension de particule moyenne inférieure à 40 μm, de deux ou de plusieurs teintes, les particules d'au moins une teinte étant teintées et les particules de l'autre teinte étant éventuellement incolores, **caractérisée en ce que** les particules utilisées pour le mélange ont respectivement une répartition granulométrique monomodale avec un intervalle (d90-d10/d50) de ≤ 2,5 et **en ce que** la masse de revêtement sous forme de poudre peut être fondue en un revêtement continu en présence de températures inférieures à 200°C, les différences de couleur, provenant des particules de couleur différente, ne pouvant pas être distinguées par l'oeil humain dans le revêtement durci.

2. Masse de revêtement selon la revendication 1, **caractérisée en ce que** dimension moyenne des particules (d50) des particules en forme de billes est comprise dans un intervalle allant de 40 μm à > 10 μm.

3. Masse de revêtement selon la revendication 1 et/ou 2, **caractérisée en ce qu'**elle permet de produire des revêtements d'une épaisseur inférieure à 50 μm.

4. Masse de revêtement selon au moins une des revendications 1 à 3, **caractérisée en ce que** la masse de revêtement contient comme liant des polyesters éventuellement réticulables.

5. Masse de revêtement selon au moins une des revendications 1 à 4, **caractérisée en ce que** les particules teintées contiennent des unités selon les formules (1) et (2).

$$-CO-X-CO$$

$$(1)$$

$$-O-D-O$$

$$(2)$$

X représentant un résidu aromatique substitué ou non substitué de $C_6$ à $C_{14}$ ou un groupe alkylène, polyméthylène, cycloalcane, diméthylène-cycloalcane ou un groupe alcanediyle linéaire ou ramifié, éventuellement non saturé et

D représente un groupe alkylène, polyméthylène, cycloalcane, diméthylène-cycloalcane ou un groupe alcanediyle linéaire ou ramifié, éventuellement non saturé.

6. Utilisation de la masse de revêtement selon au moins une des revendications 1 à 5 pour des revêtements de peinture en poudre.

7. Procédé de production de masses de revêtement de couleur sous forme de poudre d'une couleur voulue, par préparation d'au moins une masse de revêtement dans une couleur de base et d'au moins une autre masse de revêtement teintée dans une couleur différente, éventuellement incolore, et mélange des masses de revêtement, **caractérisé en ce que** chacune des masses de revêtement utilisées contient des particules sous forme de billes

## EP 0 960 169 B1

d'une dimension de particule moyenne inférieure à 40 µm et qu'après l'application de la masse de revêtement sur un substrat, il y a formation d'un revêtement continu d'une couleur voulue en présence de températures inférieures à 200°C, dans lequel les différences de la couleur, provenant des différentes particules, ne peuvent pas être distinguées par l'oeil humain.